# EUROPÄISCHE PATENTANMELDUNG

(11) **EP 4 623 664 A2**
(43) Veröffentlichungstag der Anmeldung: **01.10.2025**
(21) Anmeldenummer: 25188368.2
(22) Anmeldetag: 18.05.2021
(51) Int. Cl.: A01C 21/00

(54) **LANDWIRTSCHAFTLICHES PFLANZENPFLEGEGERÄT FÜR REIHENKULTUREN**

(30) Priorität: 05.06.2020 DE 102020114981
(62) Teilanmeldung aus: 21401026.6
(71) Anmelder: Amazonen-Werke H. Dreyer SE & Co. KG, 49205 Hasbergen (DE)
(72) Erfinder: DR. RESCH, Rainer, 49205 Hasbergen (DE); WESSELS, Thomas, 49205 Hasbergen (DE); DR. RAHE, Florian, 49205 Hasbergen (DE)

(57) **Zusammenfassung**

Die Erfindung betrifft ein landwirtschaftliches Pflanzenpflegegerät (10) für Reihenkulturen (200), mit einer Reihenerfassungseinrichtung (20), welche dazu eingerichtet ist, Verläufe und/oder Positionen von Pflanzenreihen (202a-202l) während des Durchführens einer Pflegemaßnahme an einer Reihenkultur (200) zu ermitteln, wobei die Reihenerfassungseinrichtung (20) ein erstes Sensorsystem und ein zweites Sensorsystem mit jeweils zumindest einer Sensoreinheit (22, 24) aufweist und die zumindest eine Sensoreinheit (22) des ersten Sensorsystems und die zumindest eine Sensoreinheit (24) des zweiten Sensorsystems in unterschiedlichen Höhen angeordnet sind und/oder unterschiedliche Ausrichtungen aufweisen.

## Beschreibung

Die Erfindung betrifft ein landwirtschaftliches Pflanzenpflegegerät für Reihenkulturen nach dem Oberbegriff des Patentanspruchs 1 und ein Verfahren zum Durchführen einer Pflegemaßnahme an einer Reihenkultur nach dem Oberbegriff des Patentanspruchs 12.

Bei der Pflege von Reihenkulturen ist das Ergebnis der durchgeführten Pflegemaßnahme in einem erheblichen Maße von einer präzisen Reihenerfassung abhängig. Moderne Pflanzenpflegegeräte, wie beispielsweise Hackgeräte, verfügen aus diesem Grund regelmäßig über eine Reihenerfassungseinrichtung, mittels welcher Positionen und Verläufe von Pflanzenreihen während des Durchführens von Pflegemaßnahmen an Reihenkulturen ermittelt werden können.

Das Aufzeichnen der Positionen und Verläufe von Pflanzenreihen während der Durchführung von Pflegemaßnahmen an einer Reihenkultur kann dabei sensorgestützt erfolgen, wie es beispielsweise die US 2009 0 204 281 A1, die US 2018 0 376 128 A1, die US 2020 0 100 422 A1, die DE 42 20 913 A1 oder die EP 3 298 877 B1 zeigen. Neben der sensorgestützten Erfassung von Pflanzenreihen ist beispielsweise aus der Druckschrift DE 10 2005 010 686 A1 eine satellitengestützte Ausbringung von Saatgut bekannt, sodass Positions- und Verlaufsinformationen zu den Pflanzenreihen bereits vor dem Auflaufen der Pflanzen auf der landwirtschaftlichen Nutzfläche vorliegen. Auf diese Weise kann der Reihenverlauf ermittelt werden, ohne dass die Pflanzen an der Bodenoberfläche sichtbar sein müssen.

Die während des Sävorgangs aufgezeichneten Saatgut-Positionsinformationen können dann bei der nachträglichen Durchführung von Pflegemaßnahmen an dem Pflanzenbestand verwendet werden. Aus den Druckschriften DE 10 2017 126 222 A1 und US 6,199,000 B1 ist beispielsweise die gezielte lokale Ausbringung von Pflanzenschutzmitteln auf Schadbewuchs bekannt, wobei der Schadbewuchs unter Berücksichtigung von Saatgut-Positionsinformationen und Messdaten von Spektralsensoren bzw. Chlorophyll-Detektoren erfassen wird.

In der Praxis liegen entsprechende Saatgut-Positionsinformationen, welche während der Saatgutausbringung aufgezeichnet wurden, jedoch häufig nicht vor. Aus diesem Grund wird die Bewegung und/oder der Betrieb des landwirtschaftlichen Pflanzenpflegegeräts während des Durchführens einer Pflegemaßnahme häufig in Abhängigkeit von Reiheninformationen gesteuert, welche während des Durchführens der Pflegemaßnahmen durch das Pflanzenpflegegerät selbst ermittelt werden. Hierbei werden die Positionen und/oder Verläufe von Pflanzenreihen beispielsweise kameragestützt durch das Pflanzenpflegegerät ermittelt.

In diesem Zusammenhang besteht jedoch das Problem, dass einige zur Reihenerfassung eingesetzte Sensorsysteme lediglich die präzise Reihenerkennung bei vergleichsweise jungen Pflanzen und andere zur Reihenerfassung eingesetzte Sensorsysteme lediglich die präzise Reihenerkennung bei Pflanzen erlauben, die sich bereits in einem fortgeschrittenen Wachstumsstadium befinden. Insofern sind die bekannten landwirtschaftlichen Pflanzenpflegegeräte entweder mit einem Sensorsystem ausgestattet, welches eine präzise Reihenerkennung nur in einer spezifischen Wachstumsperiode der Pflanzen erlaubt oder wobei das Sensorsystem ein Kompromiss darstellt, sodass eine Reihenerfassung in allen Wachstumsphasen der Pflanzen möglich ist, dies jedoch mit einer verringerten Erfassungspräzision einhergeht.

Fehlerhaft detektierte oder unpräzise erfasste Reihenverläufe führen zu mangelhaften Bearbeitungsergebnissen. Bei reihengeführt gesteuerten Pflegemaßnahmen kann dies einen erheblichen Ertragsverlust mit sich bringen.

Die der Erfindung zugrundeliegende Aufgabe besteht somit darin, eine präzise Reihenerfassung unabhängig vom Wachstumszustand der Pflanzen zu ermöglichen.

Die Aufgabe wird gelöst durch ein landwirtschaftliches Pflanzenpflegegerät der eingangs genannten Art, wobei die Reihenerfassungseinrichtung nach dem kennzeichnenden Teil des Patentanspruchs 1 eingerichtet ist.

Dadurch, dass die zumindest eine Sensoreinheit des ersten Sensorsystems und die zumindest eine Sensoreinheit des zweiten Sensorsystems in unterschiedlichen Höhen angeordnet sind und/oder unterschiedliche Ausrichtungen aufweisen, kann eine zuverlässige und präzise Reihendetektion sowohl bei vergleichsweise jungen Pflanzen als auch bei Pflanzen, welche sich bereits in einem fortgeschrittenen Wachstumsstadium befinden, erfolgen. Eines der Sensorsysteme kann dabei beispielsweise eine präzise Reihenerkennung bei vergleichsweise jungen Pflanzen ermöglichen, wobei das andere Sensorsystem eine präzise Reihenerkennung bei Pflanzen ermöglicht, welche sich in einem fortgeschrittenen Wachstumsstadium befinden. Das erste und das zweite Sensorsystem werden beim Durchführen einer Pflegemaßnahme an einer Reihenkultur vorzugsweise gleichzeitig eingesetzt. In diesem Fall kann eine Datenfusion der von den Sensorsystemen aufgezeichneten Sensordaten erfolgen, sodass eine besonders präzise Reihenerkennung umgesetzt wird. Alternativ kann während des Durchführens einer Pflegemaßnahme an einer Reihenkultur auch nur eines der Sensorsysteme eingesetzt werden.

Vorzugsweise ist zumindest eine Sensoreinheit des ersten Sensorsystems in einem ersten Höhenbereich oder auf einer ersten Höhe angeordnet und die zumindest eine Sensoreinheit des zweiten Sensorsystems ist in einem zweiten Höhenbereich oder auf einer zweiten Höhe angeordnet. Der erste Höhenbereich und der zweite Höhenbereich bzw. die erste Höhe und die zweite Höhe sind vertikal beabstandet voneinander. Die zumindest eine Sensoreinheit des ersten Sensorsystems ist also oberhalb oder unterhalb der zumindest einen Sensoreinheit des zweiten Sensorsystems angeordnet.

Die zumindest eine Sensoreinheit des ersten Sensorsystems und die zumindest eine Sensoreinheit des zweiten Sensorsystems sind vorzugsweise dazu eingerichtet, den Verlauf und/oder die Position zumindest einer Pflanzenreihe aus unterschiedlichen Perspektiven zu erfassen. Vorzugsweise ist die zumindest eine Sensoreinheit des ersten Sensorsystems dazu eingerichtet, den Verlauf und/oder die Position zumindest einer Pflanzenreihe aus einer ersten Perspektive zu erfassen, und die zumindest eine Sensoreinheit des zweiten Sensorsystems ist dazu eingerichtet, den Verlauf und/oder die Position zumindest einer Pflanzenreihe aus einer zweiten Perspektive zu erfassen. Die erste und die zweite Perspektive unterscheiden sich dabei voneinander.

Wenn das erste Sensorsystem und das zweite Sensorsystem jeweils mehrere Sensoreinheiten umfassen, sind die Sensoreinheiten des ersten Sensorsystems in einem ersten Höhenbereich oder auf einer ersten Höhe angeordnet und die Sensoreinheiten des zweiten Sensorsystems sind in einem zweiten Höhenbereich oder auf einer zweiten Höhe angeordnet. Alternativ oder zusätzlich weisen die Sensoreinheiten des ersten Sensorsystems eine identische Ausrichtung in Bezug auf zumindest eine Raumrichtung auf und die Sensoreinheiten des zweiten Sensorsystems weisen ebenfalls eine identische Ausrichtung in Bezug auf zumindest eine Raumrichtung auf. Die Sensoreinheiten des ersten Sensorsystems und die Sensoreinheiten des zweiten Sensorsystems weisen vorzugsweise voneinander abweichende Ausrichtungen in Bezug auf zumindest eine Raumrichtung auf.

In einer bevorzugten Ausführungsform weist das erfindungsgemäße landwirtschaftliche Pflanzenpflegegerät eine Steuerungseinrichtung auf, welche dazu eingerichtet ist, eine Steuerung der Bewegung und/oder des Betriebs des landwirtschaftlichen Pflanzenpflegegeräts in Abhängigkeit der durch die Reihenerfassungseinrichtung ermittelten Verläufe und/oder Positionen der Pflanzenreihen zu veranlassen. Wenn das landwirtschaftliche Pflanzenpflegegerät ein Anbaugerät ist, welches von einem Antriebsfahrzeug, wie etwa einem Traktor, getragen, gezogen oder geschoben wird, kann die Steuerungseinrichtung dazu eingerichtet sein, Lenkbefehle für das Antriebsfahrzeug zu erzeugen und die erzeugten Lenkbefehle an das Antriebsfahrzeug zu übermitteln. Eine Lenksteuerung des Antriebsfahrzeugs nimmt dann auf Grundlage der übermittelten Lenkbefehle einen Lenkeingriff vor. Auf diese Weise kann die Bewegung des landwirtschaftlichen Pflanzenpflegegeräts in Abhängigkeit der durch die Reihenerfassungseinrichtung ermittelten Verläufe und/oder Positionen der Pflanzenreihen verändert werden, obwohl das landwirtschaftliche Pflanzenpflegegerät ein Anbaugerät ist. Alternativ oder zusätzlich kann das Pflanzenpflegegerät beispielsweise Pflegewerkzeuge, wie beispielsweise Hackwerkzeuge, in Abhängigkeit der durch die Reihenerfassungseinrichtung ermittelten Verläufe und/oder Positionen der Pflanzenreihen verschieben und/oder ausrichten. Hierzu kann das Pflanzenpflegegerät einen oder mehrere Antriebe aufweisen, über welche die Pflegewerkzeuge verfahren und/oder ausgerichtet werden können. Alternativ kann der Betrieb von Ausbringelementen, wie beispielsweise Spritzdüsen, in Abhängigkeit der durch die Reihenerfassungseinrichtung ermittelten Verläufe und/oder Positionen der Pflanzenreihen gesteuert werden. Dabei kann beispielsweise die Position oder Ausrichtung der Ausbringelemente in Abhängigkeit der ermittelten Verläufe und/oder Positionen der Pflanzenreihen verändert werden. Alternativ oder zusätzlich können einzelne Ausbringelemente in Abhängigkeit der ermittelten Verläufe und/oder Positionen der Pflanzenreihen aktiviert und/oder deaktiviert werden, um so beispielsweise eine Teilbreitenschaltung zu realisieren, bei welcher die Ausbringung von Spritzflüssigkeit segmentweise und/oder düsenweise unterbrochen wird. Alternativ oder zusätzlich können einzelne Ausbringelemente in Abhängigkeit der ermittelten Verläufe und/oder Positionen der Pflanzenreihen ausgerichtet werden. Die Steuerungseinrichtung erlaubt eine präzise Reihenführung des Pflanzenpflegegeräts und dessen Pflegeausstattung in Abhängigkeit der durch die Reihenerfassungseinrichtung ermittelten Verläufe und/oder Positionen der Pflanzenreihen.

In einer anderen bevorzugten Ausführungsform des erfindungsgemäßen landwirtschaftlichen Pflanzenpflegegeräts sind die zumindest eine Sensoreinheit des ersten Sensorsystems und die zumindest eine Sensoreinheit des zweiten Sensorsystems unterschiedliche Sensortypen. Die Sensordatenerfassung der zumindest einen Sensoreinheit des ersten Sensorsystems und die Sensordatenerfassung der zumindest einen Sensoreinheit des zweiten Sensorsystems beruht folglich auf unterschiedlichen Mess- und/oder Aufzeichnungsprinzipien. Beispielsweise ist die zumindest eine Sensoreinheit eines Sensorsystems eine einen Bildsensor aufweisende Kamera und die zumindest eine Sensoreinheit des anderen Sensorsystems ist ein berührungslos arbeitender Abstandssensor, dessen Abstandsmessung beispielsweise auf einer Laufzeitmessung beruht. Alternativ sind die zumindest eine Sensoreinheit des ersten Sensorsystems und die zumindest eine Sensoreinheit des zweiten Sensorsystems vom gleichen Sensortyp. Die Sensordatenaufzeichnung der zumindest einen Sensoreinheit des ersten Sensorsystems und der zumindest einen Sensoreinheit des zweiten Sensorsystems beruht somit auf den gleichen Mess- und/oder Aufzeichnungsprinzipien. Beispielsweise sind die zumindest eine Sensoreinheit des ersten Sensorsystems und die zumindest eine Sensoreinheit des zweiten Sensorsystems jeweils als Kamera ausgebildet. Alternativ können die zumindest eine Sensoreinheit des ersten Sensorsystems und die zumindest eine Sensoreinheit des zweiten Sensorsystems jeweils als berührungsloser Abstandssensor ausgebildet sein, wobei die Abstandsmessung der Abstandssensoren beispielsweise auf einer Laufzeitmessung beruht. Die Sensordatenfusion zur Steigerung der Präzision der Reihenerfassung kann sowohl erfolgen, wenn die zumindest eine Sensoreinheit des ersten Sensorsystems und die zumindest eine Sensoreinheit des zweiten Sensorsystems unterschiedliche Sensortypen sind, als auch wenn die zumindest eine Sensoreinheit des ersten Sensorsystems und die zumindest eine Sensoreinheit des zweiten Sensorsystems vom gleichen Sensortyp sind.

Es ist außerdem ein landwirtschaftliches Pflanzenpflegegerät vorteilhaft, bei welchem das erste Sensorsystem und das zweite Sensorsystem dazu eingerichtet sind, den Verlauf und/oder die Position der gleichen Pflanzenreihe und/oder den Verlauf und/oder die Position von verschiedenen Pflanzenreihen zu ermitteln. Die Sensorsysteme können also zur Reihenerfassung in der gleichen Reihe einsetzbar sein. Alternativ können die Sensorsysteme zur Reihenerfassung in unterschiedlichen Reihen einsetzbar sein. Die zumindest eine Sensoreinheit des ersten Sensorsystems und die zumindest eine Sensoreinheit des zweiten Sensorsystems können in Querrichtung beabstandet voneinander sein und/oder entgegengesetzt ausgerichtet sein. Die Querrichtung erstreckt sich quer zur Fahrtrichtung des landwirtschaftlichen Pflanzenpflegegeräts. Wenn die zumindest eine Sensoreinheit des ersten Sensorsystems und die zumindest eine Sensoreinheit des zweiten Sensorsystems in Querrichtung voneinander beabstandet sind, werden der Abstand zwischen den Sensoreinheiten und/oder die Positionen der Sensoreinheiten, insbesondere relativ zum Pflanzenpflegegerät, vorzugsweise beim Ermitteln der Verläufe und/oder Positionen der Pflanzenreihen berücksichtigt. Vorzugsweise ist die zumindest eine Sensoreinheit des ersten Sensorsystems und/oder die zumindest eine Sensoreinheit des zweiten Sensorsystems starr oder beweglich an einem Querrahmen des landwirtschaftlichen Pflanzenpflegegeräts angeordnet.

In einer Weiterbildung des erfindungsgemäßen landwirtschaftlichen Pflanzenpflegegeräts weist die zumindest eine Sensoreinheit des ersten Sensorsystems einen ersten Neigungswinkel gegenüber einer Horizontalebene auf und die zumindest eine Sensoreinheit des zweiten Sensorsystems weist einen zweiten Neigungswinkel gegenüber einer Horizontalebene auf. Der erste und der zweite Neigungswinkel können sich voneinander unterscheiden. Folglich sind die zumindest eine Sensoreinheit des ersten Sensorsystems und die zumindest eine Sensoreinheit des zweiten Sensorsystems dazu eingerichtet, den Verlauf und/oder die Position zumindest einer Pflanzenreihe aus unterschiedlichen Höhenperspektiven zu erfassen. Die zumindest eine Sensoreinheit eines Sensorsystems kann horizontal oder schräg nach unten ausgerichtet, also schräg von oben blickend, auf die Pflanzen einer Pflanzenreihe schauen. Die zumindest eine Sensoreinheit des anderen Sensorsystems kann horizontal oder schräg nach oben ausgerichtet, also schräg von unten blickend, auf die Pflanzen einer Pflanzenreihe schauen. Die Sensoren sind auf die oberirdischen Abschnitte der Pflanzen ausgerichtet. Alternativ oder zusätzlich weist die zumindest eine Sensoreinheit des ersten Sensorsystems einen ersten Schwenkwinkel gegenüber einer sich in Fahrtrichtung erstreckenden Vertikalebene auf und die zumindest eine Sensoreinheit des zweiten Sensorsystems weist einen zweiten Schwenkwinkel gegenüber einer sich in Fahrtrichtung erstreckenden Vertikalebene auf. Die Sensoreinheiten können also auch schräg zur Fahrtrichtung seitlich auf die Pflanzen schauen. Der erste und der zweite Schwenkwinkel können sich voneinander unterscheiden. Die zumindest eine Sensoreinheit des ersten Sensorsystems und die zumindest eine Sensoreinheit es zweiten Sensorsystems sind vorzugsweise dazu eingerichtet, den Verlauf und/oder die Position zumindest einer Pflanzenreihe aus unterschiedlichen seitlichen Perspektiven zu erfassen.

In einer weiteren bevorzugten Ausführungsform des erfindungsgemäßen landwirtschaftlichen Pflanzenpflegegeräts ist die zumindest eine Sensoreinheit des ersten Sensorsystems und/oder die zumindest eine Sensoreinheit des zweiten Sensorsystems dazu eingerichtet, berührungslos zu arbeiten. Vorzugsweise ist die zumindest eine Sensoreinheit des ersten Sensorsystems und/oder die zumindest eine Sensoreinheit des zweiten Sensorsystems ein berührungslos arbeitender Abstandssensor oder eine einen Bildsensor aufweisende Kamera. Bei fehlenden Pflanzen in der Pflanzenreihe ist eine ausschließlich auf Abtastung basierende Reihenerfassung unpräzise und kann durch eine berührungslose Reihenerfassung unterstützt oder ersetzt werden. Insbesondere in der Auflaufphase der Pflanzen, in welcher die Wuchshöhe häufig zwei Zentimeter nicht überschreitet, kann eine berührungslose Reihenerfassung ohne Beschädigung der Pflanzen erfolgen.

Das erfindungsgemäße landwirtschaftliche Pflanzenpflegegerät wird ferner dadurch vorteilhaft weitergebildet, dass die zumindest eine Sensoreinheit des ersten Sensorsystems und/oder die zumindest eine Sensoreinheit des zweiten Sensorsystems als Abstandssensor ausgebildet ist. Vorzugsweise ist die zumindest eine Sensoreinheit des ersten Sensorsystems und/oder die zumindest eine Sensoreinheit des zweiten Sensorsystems dazu eingerichtet, den Abstand zu Pflanzen einer oder mehrerer Pflanzenreihen zu messen. Bei hochgewachsenen und/oder blattreichen Pflanzen ist eine ausschließlich kamerabasierte Reihenerfassung unpräzise, da die Pflanzenreihen nicht mehr aufgelöst werden können und die Ermittlung der tatsächlichen Stängelposition nicht möglich ist. In diesem Fall kann die kamerabasierte Reihenerfassung durch eine auf Messwerten eines Abstandssensors basierende Reihenerfassung unterstützt oder ersetzt werden. Der Abstandssensor kann dabei beispielsweise ein Ultraschallsensor sein. Alternativ kann der Abstandssensor ein Radarsensor, ein Time-of-Flight (ToF) Sensor, ein Lidarsensor, ein Lasersensor oder ein Laser-Profil-Scanner sein.

In einer weiteren bevorzugten Ausführungsform des erfindungsgemäßen landwirtschaftlichen Pflanzenpflegegeräts umfasst die zumindest eine Sensoreinheit des ersten Sensorsystems und/oder die zumindest eine Sensoreinheit des zweiten Sensorsystems zumindest einen Bildsensor und/oder ist als Kamera ausgebildet. Vorzugsweise weist die Reihenerfassungseinrichtung eine Datenverarbeitungseinrichtung auf, welche dazu eingerichtet ist, die Bildaufnahmen des ersten Sensorsystems und/oder des zweiten Sensorsystems zur Reihenerkennung auszuwerten. Beispielsweise ist die Datenverarbeitungseinrichtung dazu eingerichtet, den Verlauf und/oder die Position zumindest einer Reihe als Strukturinformation aus den Bildaufnahmen des ersten Sensorsystems und/oder des zweiten Sensorsystems abzuleiten. Die Sensoreinheit eines Sensorsystems kann beispielsweise eine obere Kamera sein, wobei die Sensoreinheit des anderen Sensorsystems eine untere Kamera sein kann. Die obere Kamera und die untere Kamera können horizontal, geneigt in Bezug auf eine Horizontalebene und/oder verschwenkt in Bezug auf eine sich in Fahrtrichtung erstreckende Vertikalebene ausgerichtet sein. Dies ermöglicht eine zuverlässige und präzise Reihenerkennung unabhängig vom Wachstumszustand der Pflanzen. Beispielsweise können die Sensoreinheiten beider Sensorsysteme auch jeweils eine Kamera sein, welche oberhalb des Pflanzenbestandes angeordnet ist, wobei die Kameras in diesem Fall vorzugsweise unterschiedliche Ausrichtungen aufweisen. Über eine an die Kameraausrichtung angepasste Bildauswertung kann dann der Reihenverlauf sowohl bei jungen Pflanzen als auch bei Pflanzen, welche sich in einem fortgeschrittenen Wachstumsstadium befinden, zuverlässig ermittelt werden. Bei starker Verunkrautung und/oder fehlenden Pflanzen ist eine berührungslose und auf Messwerten der Abstandssensoren basierende Reihenerfassung vergleichsweise unpräzise und kann durch eine kamerabasierte Reihenerfassung unterstützt und/oder ersetzt werden.

Ferner ist es denkbar, dass die zumindest eine Sensoreinheit des ersten Sensorsystems und/oder die zumindest eine Sensoreinheit des zweiten Sensorsystems als Reihentaster ausgebildet sind und/oder zumindest einen Tastsensor umfassen. In diesem Fall würde die zumindest eine Sensoreinheit des ersten Sensorsystems und/oder die zumindest eine Sensoreinheit des zweiten Sensorsystems nicht-berührungslos arbeiten.

In einer Weiterbildung des erfindungsgemäßen landwirtschaftlichen Pflanzenpflegegeräts weist die Reihenerfassungseinrichtung eine elektronische Datenverarbeitungseinrichtung auf, welche dazu eingerichtet ist, unter Berücksichtigung von Sensordaten des ersten Sensorsystems und Sensordaten des zweiten Sensorsystems Verläufe und/oder Positionen von Pflanzenreihen zu ermitteln. Die Datenverarbeitungseinrichtung berücksichtigt bei der Positions- bzw. Verlaufsermittlung folglich Sensordaten von zwei Sensorsystemen. Auf Grundlage der ermittelten Verläufe und/oder Positionen von Pflanzenreihen kann dann das Pflanzenpflegegerät und/oder ein Antriebsfahrzeug, an welchem das Pflanzenpflegegerät angebaut ist, gesteuert werden. Beispielsweise können auf Grundlage der ermittelten Verläufe und/oder Positionen von Pflanzenreihen Lenkbefehle für das Antriebsfahrzeug erzeugt werden. Die Lenkbefehle können dann an das Antriebsfahrzeug übermittelt werden, sodass ein Lenkeingriff auf Grundlage der Lenkbefehle selbsttätig durch eine Lenksteuerung des Antriebsfahrzeugs umgesetzt werden kann.

Bei der Steuerung des Pflanzenpflegegeräts und/oder des Antriebsfahrzeugs, an dem das Pflanzenpflegegerät angebaut ist, werden die Abmessungen des Pflanzenpflegegeräts und/oder des Antriebsfahrzeugs berücksichtigt.

Das erfindungsgemäße landwirtschaftliche Pflanzenpflegegerät wird ferner definiert weitergebildet, dass die elektronische Datenverarbeitungseinrichtung dazu eingerichtet ist, im Rahmen einer Sensordatenbewertung die Verwertbarkeit der Sensordaten des ersten Sensorsystems und/oder des zweiten Sensorsystems zum Ermitteln von Verläufen und/oder Positionen von Pflanzenreihen zu bewerten. Wenn das erste Sensorsystem und/oder das zweiten Sensorsystem mehrere Sensoreinheiten umfassen, kann die elektronische Datenverarbeitungseinrichtung dazu eingerichtet sein, im Rahmen einer Sensordatenbewertung die Verwertbarkeit der Sensordaten der jeweiligen Sensoreinheiten zum Ermitteln von Verläufen und/oder Positionen von Pflanzenreihen zu bewerten. Die elektronische Datenverarbeitungseinrichtung kann beispielsweise die Datenplausibilität als Bewertungskriterium für die Verwertbarkeit der Sensordaten berücksichtigen. Auf Grundlage der Sensordatenbewertung kann entschieden werden, ob und/oder in welchem Maße die Sensordaten des jeweiligen Sensorsystems bzw. die Sensordaten der jeweiligen Sensoreinheiten bei der Verlaufs- und/oder Positionsermittlung berücksichtigt werden.

In einer weiteren bevorzugten Ausführungsform des erfindungsgemäßen landwirtschaftlichen Pflanzenpflegegeräts ist die Datenverarbeitungseinrichtung dazu eingerichtet, die Verläufe und/oder Positionen von Pflanzenreihen in Abhängigkeit der Sensordatenbewertung wahlweise über Sensordaten beider Sensorsysteme oder über Sensordaten nur eines der Sensorsysteme zu ermitteln. Die Auswahl erfolgt vorzugsweise auf Grundlage der Sensordaten des ersten Sensorsystems und der Sensordaten des zweiten Sensorsystems. Wenn Sensordaten beider Sensorsysteme in geeignetem Maße verwertbar sind, kann eine Datenfusion zur Reihenerfassung umgesetzt werden. Es kann auch eine Art Genauigkeitsband von der elektronischen Datenverarbeitungseinrichtung berechnet werden. Durch Vergleichen bzw. Übereinanderlegen der Genauigkeitsbänder kann die elektronische Datenverarbeitungseinrichtung dann Bereiche identifizieren, in welchen mit einer äußerst hohen Wahrscheinlichkeit eine Pflanze steht oder eine Pflanzenreihe verläuft.

In einer weiteren bevorzugten Ausführungsform umfassen das erste Sensorsystem und das zweite Sensorsystem jeweils mehrere Sensoreinheiten und die Datenverarbeitungseinrichtung ist dazu eingerichtet, beim Ermitteln von Verläufen und/oder Positionen von Pflanzenreihen in Abhängigkeit der Sensordatenbewertung Sensordaten einzelner Sensoreinheiten des ersten Sensorsystems und/oder Sensordaten einzelner Sensoreinheiten des zweiten Sensorsystems unberücksichtigt zu lassen. Insbesondere, wenn die Sensordaten darauf hinweisen, dass ein Sensorsystem oder eine Sensoreinheit erhebliche Erfassungsschwierigkeiten hat, können diese Sensordaten zur Vermeidung eines negativen Einflusses auf die Reihenerfassung unberücksichtigt bleiben.

In einer anderen bevorzugten Ausführungsform des erfindungsgemäßen landwirtschaftlichen Pflanzenpflegegeräts ist die elektronische Datenverarbeitungseinrichtung dazu eingerichtet, die Sensordaten des ersten Sensorsystems und/oder die Sensordaten des zweiten Sensorsystems in Abhängigkeit der Sensordatenbewertung zu gewichten und Verläufe und/oder Positionen von Pflanzenreihen über die gewichteten Sensordaten zu ermitteln. Wenn das erste Sensordatensystem und/oder das zweite Sensordatensystem mehrere Sensoreinheiten umfasst, kann die elektronische Datenverarbeitungseinrichtung dazu eingerichtet sein, die Sensordaten der jeweiligen Sensoreinheiten in Abhängigkeit der Sensordatenbewertung zu gewichten und Verläufe und/oder Positionen von Pflanzenreihen über die gewichteten Sensordaten zu ermitteln. Wenn die Sensordatenbewertung darauf hinweist, dass die bewerteten Sensordaten Verläufe und/oder Positionen von Pflanzenreihen vergleichsweise präzise wiedergeben, kann diesen Sensordaten beispielsweise ein hoher Gewichtungsfaktor zugeordnet werden. Wenn die Sensordatenbewertung darauf hinweist, dass die bewerteten Sensordaten Verläufe und/oder Positionen von Pflanzenreihen lediglich vergleichsweise unpräzise wiedergeben, kann diesen Sensordaten ein niedriger Gewichtungsfaktor zugewiesen werden. Die Sensordaten können dann unter Berücksichtigung ihrer Gewichtungsfaktoren bei der Verlaufs- und/oder Positionsermittlung berücksichtigt werden.

Es ist ein landwirtschaftliches Pflanzenpflegegeräterfindungsgemäß, bei welchem die elektronische Datenverarbeitungseinrichtung dazu eingerichtet ist, zur Erhöhung der Verwertbarkeit der Sensordaten des ersten Sensorsystems zum Ermitteln von Verläufen und/oder Positionen von Pflanzenreihen eine Auswertungsroutine für die Sensordaten des ersten Sensorsystems selbsttätig unter Berücksichtigung der Sensordaten des zweiten Sensorsystems zu verändern. Alternativ oder zusätzlich ist die elektronische Datenverarbeitungseinrichtung dazu eingerichtet, zur Erhöhung der Verwertbarkeit der Sensordaten des zweiten Sensorsystems zum Ermitteln von Verläufen und/oder Positionen von Pflanzenreihen eine Auswertungsroutine für die Sensordaten des zweiten Sensorsystems selbsttätig unter Berücksichtigung der Sensordaten des ersten Sensorsystems zu verändern. Es erfolgt also ein gegenseitiges Anlernen der Sensorsysteme mit den Daten des jeweils anderen Sensorsystems. Auf diese Weise können Probleme der jeweiligen Sensorsysteme beim Erfassen von Verläufen und/oder Positionen von Pflanzenreihen mit fortschreitender Verwendung des landwirtschaftlichen Pflanzenpflegegeräts reduziert werden. Wenn sich die Pflanzen bereits in einem fortgeschrittenen Wachstumsstadium befinden, kann ein vorhandenes Blätterdach die kamerabasierte Reihenerkennung beeinträchtigen, da eine kamerabasierte Erfassung der Stängelposition nicht präzise möglich ist. In diesem Fall kann ein Abstandssensor des anderen Sensorsystems, welcher unterhalb der Kamera angeordnet ist, den Stängelabstand vergleichsweise präzise ermitteln. Über die Daten des Abstandssensors kann nun die kameragestützte Reihenerkennung trainiert werden. Beispielsweise kann die Auswerteroutine für die Aufnahmen der Kamera dann selbsttätig derart angepasst werden, dass nicht länger die Stängel, sondern der Mittelpunkt der Blätter als Referenzpunkt für eine Pflanzenposition detektiert wird. Wenn dann der untere Abstandssensor den Reihenabstand nicht mehr präzise messen kann, beispielsweise aufgrund starker Verunkrautung, kann die Reihenerfassung auf Grundlage der Kameraaufnahmen erfolgen, da diese nun auf die neuen Gegebenheiten trainiert worden ist. Durch das gegenseitige Trainieren der Sensorsysteme wird die Erfassungspräzision mit fortschreitender Nutzungsdauer des landwirtschaftlichen Pflanzenpflegegeräts erhöht.

Die der Erfindung zugrundeliegende Aufgabe wird ferner durch ein Verfahren der eingangs genannten Art gelöst, wobei im Rahmen des erfindungsgemäßen Verfahrens das Ermitteln der Verläufe und/oder Positionen der Pflanzenreihen nach dem Patentanspruch 12 erfolgt. Das erfindungsgemäße Verfahren wird vorzugsweise mittels eines landwirtschaftlichen Pflanzenpflegegeräts nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen landwirtschaftlichen Pflanzenpflegegeräts verwiesen.

Die zumindest eine Sensoreinheit des ersten Sensorsystems erfasst die Pflanzen der Pflanzenreihen aus einer ersten Perspektive und die zumindest eine Sensoreinheit des zweiten Sensorsystems erfasst die Pflanzen der Pflanzenreihen aus einer zweiten Perspektive. Vorzugsweise ermittelt eine elektronische Datenverarbeitungseinrichtung der Reihenerfassungseinrichtung die Verläufe und/der Positionen der Pflanzenreihen unter Berücksichtigung von Sensordaten des ersten Sensorsystems und Sensordaten des zweiten Sensorsystems.

In einer bevorzugten Ausführungsform des erfindungsgemäßen Verfahrens erfolgt das Ermitteln der Verläufe und/oder Positionen der Pflanzenreihen bei einem der Sensorsysteme über eine kamerabasierte Bildaufzeichnung und bei einem der Sensorsysteme über eine berührungslose Abstandsmessung. Die Abstandsmessung kann beispielsweise eine Laufzeitmessung umfassen. Ferner kann das Verfahren das Bewerten der Verwertbarkeit der Sensordaten des ersten Sensorsystems zum Ermitteln der Verläufe und/oder Positionen der Pflanzenreihen mittels einer elektronischen Datenverarbeitungseinrichtung im Rahmen einer Sensordatenbewertung umfassen. Außerdem kann das Verfahren das Bewerten der Verwertbarkeit der Sensordaten des zweiten Sensorsystems zum Ermitteln der Verläufe und/oder Positionen der Pflanzenreihen mittels einer elektronischen Datenverarbeitungseinrichtung um Rahmen einer Sensordatenbewertung umfassen. Die Verläufe und/oder Positionen der Pflanzenreihen werden vorzugsweise in Abhängigkeit der Sensordatenbewertung wahlweise über Sensordaten beider Sensorsysteme oder über Sensordaten nur eines der Sensorsysteme ermittelt. Beim Ermitteln der Verläufe und/oder Positionen der Pflanzenreihen in Abhängigkeit der Sensordatenbewertung können Sensordaten einzelner Sensoreinheiten des ersten Sensorsystems und/oder Sensordaten einzelner Sensoreinheiten des zweiten Sensorsystems unberücksichtigt bleiben und die Sensordaten des ersten Sensorsystems und/oder die Sensordaten des zweiten Sensorsystems können in Abhängigkeit der Sensordatenbewertung von der elektronischen Datenverarbeitungseinrichtung gewichtet werden. Die elektrische Datenverarbeitungseinrichtung kann dann die Verläufe und/oder Positionen der Pflanzenreihen über die gewichteten Sensordaten ermitteln.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Pflegesystem aus einem Antriebsfahrzeug und einem erfindungsgemäßen landwirtschaftlichen Pflanzenpflegegerät während des Durchführens einer Pflegemaßnahme an einer Reihenkultur mit vergleichsweise jungen Pflanzen in einer Draufsicht;
- Fig. 2: das in der Fig. 1 abgebildete Pflegesystem ebenfalls während des Durchführens der Pflegemaßnahme in einer Seitenansicht;
- Fig. 3: ein Pflegesystem aus einem Antriebsfahrzeug und einem erfindungsgemäßen landwirtschaftlichen Pflanzenpflegegerät während des Durchführens einer Pflegemaßnahme an einer Reihenkultur mit Pflanzen, welche sich in einem fortgeschrittenen Wachstumsstadium befinden, in einer Draufsicht; und
- Fig. 4: das in der Fig. 3 abgebildete Pflegesystem ebenfalls während des Durchführens der Pflegemaßnahme in einer Seitenansicht.

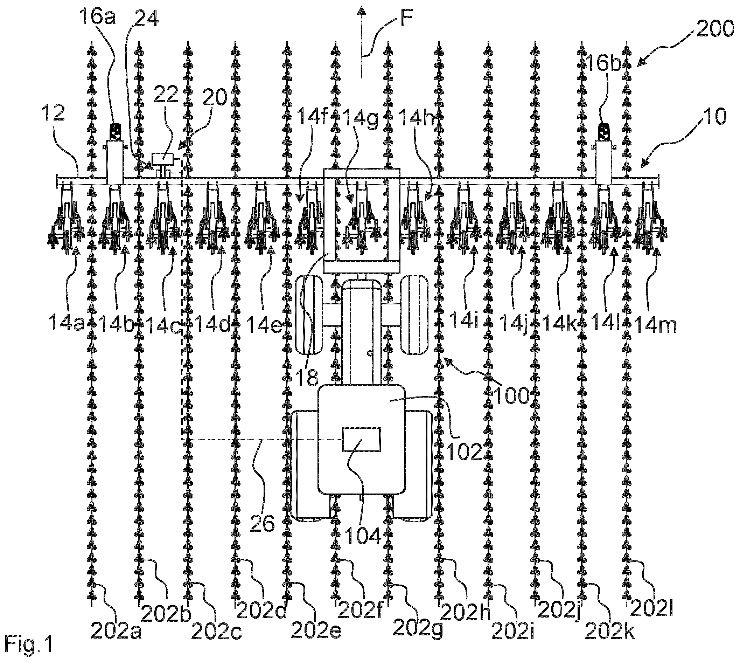

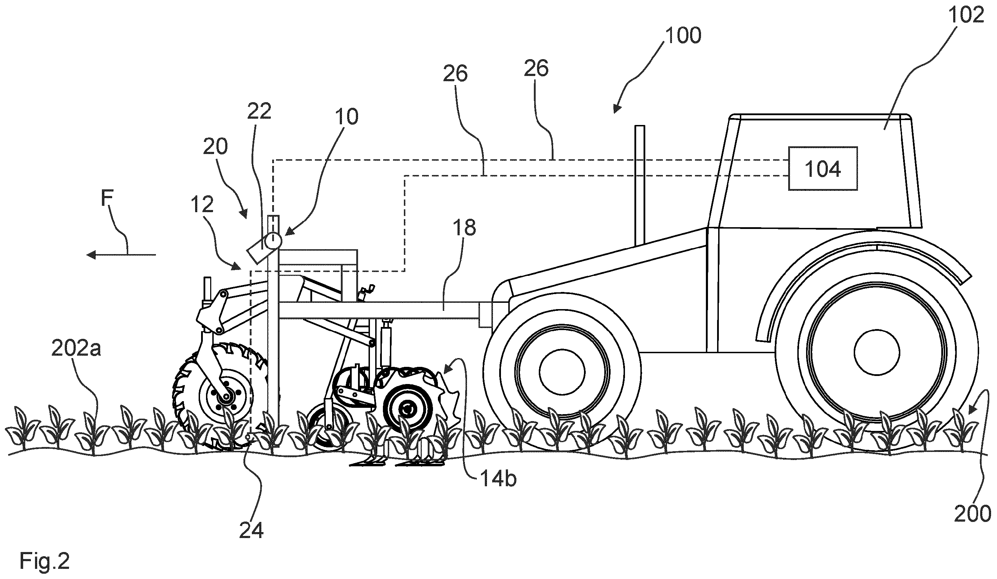

Die Fig. 1 und 2 zeigen ein Pflegesystem 100 mit einem Antriebsfahrzeug 102 und einem landwirtschaftlichen Pflanzenpflegegerät 10. Das Antriebsfahrzeug 102 ist ein Traktor. Das Pflanzenpflegegerät 10 ist ein landwirtschaftliches Hackgerät, welches über eine Kupplungsvorrichtung 18 an einer Frontaufnahme des Antriebsfahrzeugs 102 befestigt ist.

Das landwirtschaftliche Pflanzenpflegegerät 10 weist einen Querträger 12 auf, an welchem mehrere als Hackwerkzeuge ausgebildete Pflegewerkzeuge 14a-14m befestigt sind. Die Pflegewerkzeuge 14a-14m sind in Querrichtung, also quer zur Fahrtrichtung F, nebeneinander angeordnet und äquidistant voneinander beabstandet. Der Querträger 12 wird über Räder 16a, 16b gegenüber dem Boden der landwirtschaftlichen Nutzfläche abgestützt.

Mit dem landwirtschaftlichen Pflanzenpflegegerät 10 wird eine Pflegemaßnahme, nämlich ein Hackvorgang, an einer Reihenkultur 200 durchgeführt. Die Reihenkultur 200 weist mehrere Pflanzenreihen 202a-202l auf. Das landwirtschaftliche Pflanzenpflegegerät 10 umfasst eine Steuerungseinrichtung, mittels welcher ein Lenkeingriff am Antriebsfahrzeug 102 umgesetzt werden kann. Über den Lenkeingriff am Antriebsfahrzeug 102 wird die Bewegung des Pflanzenpflegegeräts 10 gesteuert.

Das landwirtschaftliche Pflanzenpflegegerät 10 umfasst eine Reihenerfassungseinrichtung 20, mittels welcher die Verläufe und Positionen der Pflanzenreihen 202a-202l während des Durchführens der Pflegemaßnahme an der Reihenkultur 200 ermittelt werden können. Auf diese Weise kann eine reihenbezogene Steuerung der Bewegung des Pflanzenpflegegeräts 10 realisiert werden.

Die Steuerungseinrichtung des landwirtschaftlichen Pflanzenpflegegeräts 10 erzeugt unter Berücksichtigung der über die Reihenerfassungseinrichtung 20 ermittelten Verläufe und Positionen der Pflanzenreihen 202a-202l Lenkbefehle, welche über die Datenverbindung 26 an das Antriebsfahrzeug 102 übermittelt werden. Die Lenksteuerung 104 des Antriebsfahrzeugs 102 setzt die über die Datenverbindung 26 übermittelten Lenkbefehle in Lenkeingriffe um. Die Datenverbindung 26 kann eine kabellose oder kabelgebundene Datenverbindung sein. Das Antriebsfahrzeug 102 und das Pflanzenpflegegerät 10 können ein Tractor Implement Management (TIM) System ausbilden. In diesem System kann die Bewegung des Antriebsfahrzeugs 102 über das Pflanzenpflegegerät 10 gesteuert werden.

Die Reihenerfassungseinrichtung 20 umfasst ein erstes Sensorsystem mit einer Sensoreinheit 22 und ein zweites Sensorsystem mit einer Sensoreinheit 24. Die Sensoreinheit 22 des ersten Sensorsystems ist eine einen Bildsensor umfassende Kamera. Die Sensoreinheit 24 des zweiten Sensorsystems ist ein berührungslos arbeitender Abstandssensor. Die Sensoreinheit 24 ist vorzugsweise dazu eingerichtet, den Abstand zu Pflanzen oder Pflanzenreihen mittels einer Laufzeitmessung zu ermitteln. Insbesondere ist die Sensoreinheit 24 ein Ultraschallsensor, ein Radarsensor, ein Lidarsensor, ein Lasersensor oder ein Laser-Profil-Scanner. Die Sensoreinheit 22 und die Sensoreinheit 24 sind folglich dazu eingerichtet, die Verläufe und/oder Positionen der Pflanzenreihen 202a-202l über unterschiedliche Mess- bzw. Aufzeichnungsprinzipien zu ermitteln. Mithin sind die Sensoreinheiten 22, 24 unterschiedliche Sensortypen.

Die Sensoreinheit 22 des ersten Sensorsystems und die Sensoreinheit 24 des zweiten Sensorsystems sind in unterschiedlichen Höhen angeordnet und weisen unterschiedliche Ausrichtungen auf. Die Sensoreinheit 22 ist oberhalb der Sensoreinheit 24 angeordnet. Aufgrund der unterschiedlichen Höhenanordnung und der unterschiedlichen Ausrichtung der Sensoreinheiten 22, 24 erfassen diese die Verläufe und Positionen der Pflanzenreihen 202a-202l aus unterschiedlichen Perspektiven. Die Sensoreinheit 22 schaut schräg von oben auf den Pflanzenbestand. Die untere Sensoreinheit 24 ist auf einen Stängelbereich der Pflanzen gerichtet und im Wesentlichen horizontal ausgerichtet. Die Sensoreinheit 22 des ersten Sensorsystems weist also einen ersten Neigungswinkel gegenüber einer Horizontalebene auf, wobei die Sensoreinheit 24 des zweiten Sensorsystems einen zweiten Neigungswinkel gegenüber einer Horizontalebene aufweist. Der Neigungswinkel der Sensoreinheit 22 gegenüber der Horizontalebene liegt im Bereich zwischen 20 und 60 Grad. Der Neigungswinkel der Sensoreinheit 24 gegenüber der Horizontalebene liegt in einem Bereich zwischen 0 und 20 Grad.

Das erste Sensorsystem, welches die Sensoreinheit 22 umfasst, und das zweite Sensorsystem, welches die Sensoreinheit 24 umfasst, können den Verlauf und/oder die Position der gleichen Pflanzenreihe oder den Verlauf und die Position von unterschiedlichen Pflanzenreihen ermitteln. Es kann also eine Reihenerfassung in der gleichen Reihe als auch eine Reihenerfassung in unterschiedlichen Reihen mittels der Reihenerfassungseinrichtung 20 umgesetzt werden.

Die Reihenerfassungseinrichtung 20 weist eine elektronische Datenverarbeitungseinrichtung auf, mittels welcher unter Berücksichtigung von Sensordaten der Sensoreinheit 22 und Sensordaten der Sensoreinheit 24 die Positionen und Verläufe der Pflanzenreihen 202a-202l ermittelt werden können.

Bei dem in den Fig. 1 und 2 dargestellten Zustand sind die Pflanzen der Pflanzenreihen 202a-202l vergleichsweise jung und klein. In diesem Wachstumsstadium der Pflanzen kann eine besonders präzise Reihenerfassung über die als Kamera ausgebildete Sensoreinheit 22 des ersten Sensorsystems erfolgen. In dem dargestellten Wachstumsstadium eignen sich die Sensordaten der Sensoreinheit 24, welcher als berührungslos arbeitender Abstandssensor ausgebildet ist, nur bedingt zur präzisen Reihenerkennung. Die Sensordaten der Sensoreinheit 24 können bei der Reihenerfassung durch die elektronische Datenverarbeitungseinrichtung trotzdem mit einer geringeren Gewichtung berücksichtigt werden.

Die Datenverarbeitungseinrichtung nimmt während der Reihenerfassung eine Sensordatenbewertung der Sensordaten der Sensoreinheiten 22, 24 vor. Im Rahmen der Sensordatenbewertung wird die Verwertbarkeit der Sensordaten zum Ermitteln von Verläufen und Positionen von Pflanzenreihen 202a-202l bewertet. In Abhängigkeit der Sensordatenbewertung kann die Datenverarbeitungseinrichtung die Verläufe und Positionen der Pflanzenreihen 202a-202l wahlweise über Sensordaten beider Sensorsysteme oder über Sensordaten nur eines der Sensorsysteme ermitteln.

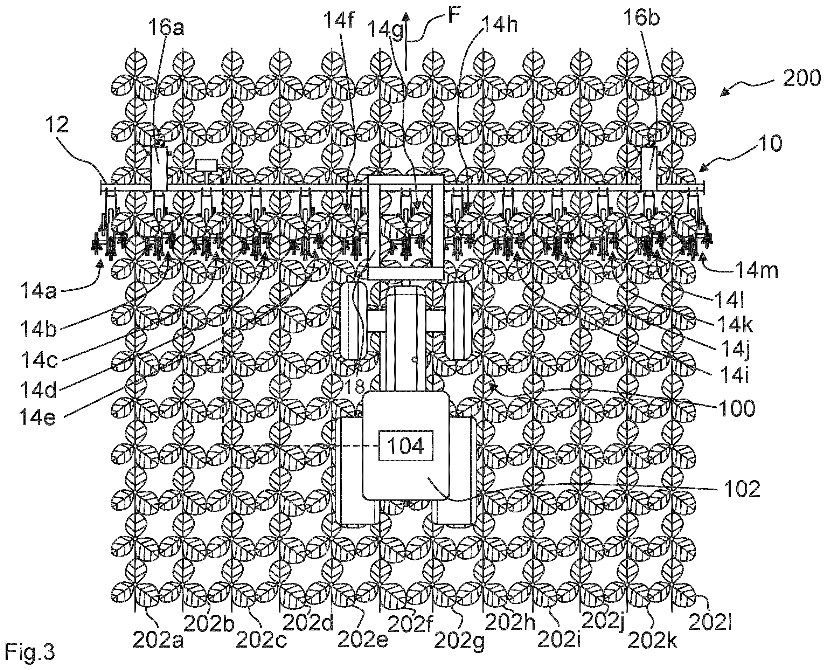

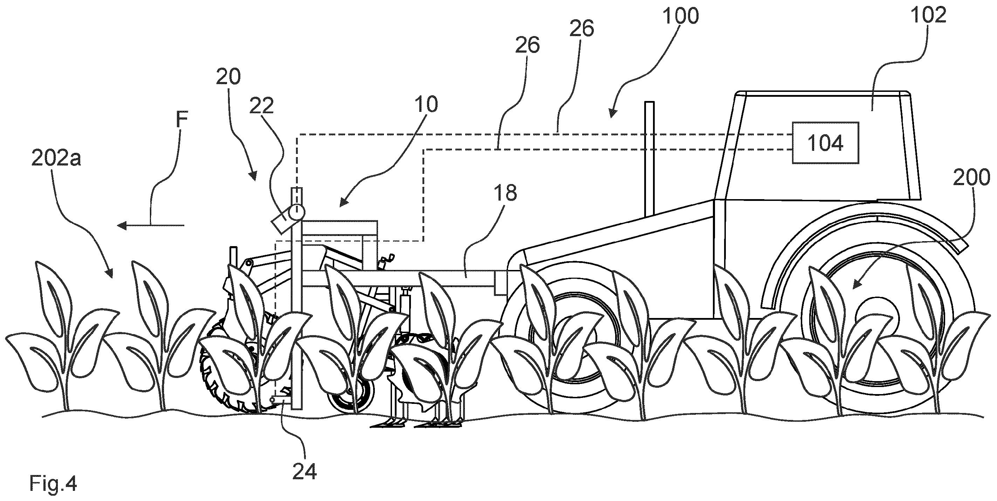

In den Fig. 3 und 4 ist ebenfalls die Durchführung einer Pflegemaßnahme an der Reihenkultur 200 dargestellt. In dem dargestellten Zustand befinden sich die Pflanzen in einem fortgeschrittenen Wachstumsstadium, sodass die Pflanzen bereits ausgeprägte Blätterstrukturen entwickelt haben. Aufgrund der ausgeprägten Blätterstrukturen kann die Reihenerfassung mit dem ersten die Sensoreinheit 22 umfassenden Sensorsystem nur noch vergleichsweise unpräzise erfolgen. Jedoch sind in diesem Wachstumsstadium die Stängel der Pflanzen über die Sensoreinheit 24 des zweiten Sensorsystems äußerst präzise zu ermitteln. Auf Grundlage der Sensordatenbewertung werden den Sensordaten der Sensoreinheit 24 nunmehr höhere Gewichtungsfaktoren von der Datenverarbeitungseinrichtung zugeordnet, sodass die Erfassung der Verläufe und Positionen der Pflanzenreihen 202a-202l schwerpunktmäßig auf den Sensordaten der Sensoreinheit 24 des zweiten Sensorsystems beruht. Den Sensordaten der Sensoreinheit 22 werden niedrigere Gewichtungsfaktoren zugeordnet als bei der in den Fig. 1 und 2 dargestellten Pflegemaßnahmendurchführung.

Die Zuordnung von Gewichtungsfaktoren erfolgt auf Grundlage einer Datenauswertung. Wenn die Sensordaten darauf hindeuten, dass bei der Datenerfassung Erfassungsschwierigkeiten vorlagen, wird den Sensordaten ein niedrigerer Gewichtungsfaktor zugeordnet. Wenn die Sensordaten darauf hinweisen, dass keine Erfassungsschwierigkeiten oder nur geringfügige Erfassungsschwierigkeiten vorlagen, wird den Sensordaten ein höherer Gewichtungsfaktor zugeordnet. Beispielsweise können inhomogene und/oder nicht-plausible Daten auf Erfassungsschwierigkeiten hindeuten. Der Gewichtungsfaktor sinkt vorzugsweise mit zunehmenden Erfassungsschwierigkeiten.

Die Datenverarbeitungseinrichtung der Reihenerfassungseinrichtung 20 kann ferner über eine Lernroutine verfügen. Im Rahmen dieser Lernroutine kann die Verwertbarkeit von Sensordaten eines Sensorsystems verbessert werden. Beispielsweise wird zur Erhöhung der Verwertbarkeit der Sensordaten des ersten Sensorsystems zum Ermitteln der Verläufe und Positionen der Pflanzenreihen 202a-202l die Auswertungsroutine für die Sensordaten des ersten Sensorsystems selbsttätig unter Berücksichtigung der Sensordaten des zweiten Sensorsystems verändert. Alternativ oder zusätzlich kann die Verwertbarkeit der Sensordaten des zweiten Sensorsystems zum Ermitteln der Verläufe und Positionen der Pflanzenreihen 202a-202l die Auswertungsroutine für die Sensordaten des zweiten Sensorsystems selbsttätig unter Berücksichtigung der Sensordaten des ersten Sensorsystems verändert werden. Die Auswertungsroutinen für die Sensordaten der Sensoreinheit 22 des ersten Sensorsystems und die Sensordaten der Sensoreinheit 24 des zweiten Sensorsystems können somit über die Sensordaten des jeweils anderen Sensorsystems verbessert werden.

### Bezugszeichen

- 10: Pflanzenpflegegerät
- 12: Querträger
- 14a-14m: Pflegewerkzeuge
- 16a, 16b: Räder
- 18: Kupplungsvorrichtung
- 20: Reihenerfassungseinrichtung
- 22: Sensoreinheit
- 24: Sensoreinheit
- 26: Datenverbindung

- 100: Pflegesystem
- 102: Antriebsfahrzeug
- 104: Lenksteuerung

- 200: Reihenkultur
- 202a-202l: Pflanzenreihen

- F: Fahrtrichtung

## Patentansprüche

1. Landwirtschaftliches Pflanzenpflegegerät (10) für Reihenkulturen (200), mit
- einer Reihenerfassungseinrichtung (20), welche dazu eingerichtet ist, Verläufe und/oder Positionen von Pflanzenreihen (202a-202l) während des Durchführens einer Pflegemaßnahme an einer Reihenkultur (200) zu ermitteln;
wobei die Reihenerfassungseinrichtung (20) ein erstes Sensorsystem und ein zweites Sensorsystem mit jeweils zumindest einer Sensoreinheit (22, 24) aufweist, wobei die zumindest eine Sensoreinheit (22) des ersten Sensorsystems und die zumindest eine Sensoreinheit (24) des zweiten Sensorsystems in unterschiedlichen Höhen angeordnet sind und/oder unterschiedliche Ausrichtungen aufweisen, wobei die Reihenerfassungseinrichtung (20) eine elektronische Datenverarbeitungseinrichtung aufweist, welche dazu eingerichtet ist, unter Berücksichtigung von Sensordaten des ersten Sensorsystems und Sensordaten des zweiten Sensorsystems Verläufe und/oder Positionen von Pflanzenreihen (202a-202l) zu ermitteln, **dadurch gekennzeichnet, dass** die elektronische Datenverarbeitungseinrichtung dazu eingerichtet ist,
- zur Erhöhung der Verwertbarkeit der Sensordaten des ersten Sensorsystems zum Ermitteln von Verläufen und/oder Positionen von Pflanzenreihen (202a-202l) eine Auswertungsroutine für die Sensordaten des ersten Sensorsystems selbsttätig unter Berücksichtigung der Sensordaten des zweiten Sensorsystems zu verändern; und/oder
- zur Erhöhung der Verwertbarkeit der Sensordaten des zweiten Sensorsystems zum Ermitteln von Verläufen und/oder Positionen von Pflanzenreihen (202a-202l) eine Auswertungsroutine für die Sensordaten des zweiten Sensorsystems selbsttätig unter Berücksichtigung der Sensordaten des ersten Sensorsystems zu verändern.

2. Landwirtschaftliches Pflanzenpflegegerät (10) nach Anspruch 1, **gekennzeichnet durch** eine Steuerungseinrichtung, welche dazu eingerichtet ist, eine Steuerung der Bewegung und/oder des Betriebs des landwirtschaftlichen Pflanzenpflegegeräts (10) in Abhängigkeit der durch die Reihenerfassungseinrichtung (20) ermittelten Verläufe und/oder Positionen der Pflanzenreihen (202a-202l) zu veranlassen.

3. Landwirtschaftliches Pflanzenpflegegerät (10) nach Anspruch 1 oder 2, **dadurch gekennzeichnet, dass** die zumindest eine Sensoreinheit (22) des ersten Sensorsystems und die zumindest eine Sensoreinheit (24) des zweiten Sensorsystems unterschiedliche Sensortypen sind.

4. Landwirtschaftliches Pflanzenpflegegerät (10) nach einem der vorstehenden Ansprüche,
**dadurch gekennzeichnet, dass** das erste Sensorsystem und das zweite Sensorsystem dazu eingerichtet sind, den Verlauf und/oder die Position der gleichen Pflanzenreihe (202a-202l) und/oder den Verlauf und/oder die Position von verschiedenen Pflanzenreihen (202a-202l) zu ermitteln.

5. Landwirtschaftliches Pflanzenpflegegerät (10) nach einem der vorstehenden Ansprüche,
**dadurch gekennzeichnet, dass**
- die zumindest eine Sensoreinheit (22) des ersten Sensorsystems einen ersten Neigungswinkel gegenüber einer Horizontalebene aufweist und die zumindest eine Sensoreinheit (24) des zweiten Sensorsystems einen zweiten Neigungswinkel gegenüber einer Horizontalebene aufweist; und/oder
- die zumindest eine Sensoreinheit (22) des ersten Sensorsystems einen ersten Schwenkwinkel gegenüber einer sich in Fahrtrichtung erstreckenden Vertikalebene aufweist und die zumindest eine Sensoreinheit (24) des zweiten Sensorsystems einen zweiten Schwenkwinkel gegenüber einer sich in Fahrtrichtung erstreckenden Vertikalebene aufweist.

6. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems dazu eingerichtet ist, berührungslos zu arbeiten.

7. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems als Abstandssensor ausgebildet ist.

8. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems zumindest einen Bildsensor umfasst und/oder als Kamera ausgebildet ist.

9. Landwirtschaftliches Pflanzenpflegegerät (10) nach einem der vorstehenden Ansprüche,
**dadurch gekennzeichnet, dass** die elektronische Datenverarbeitungseinrichtung dazu eingerichtet ist, im Rahmen einer Sensordatenbewertung die Verwertbarkeit der Sensordaten des ersten Sensorsystems und/oder des zweiten Sensorsystems zum Ermitteln von Verläufen und/oder Positionen von Pflanzenreihen (202a-202l) zu bewerten.

10. Landwirtschaftliches Pflanzenpflegegerät (10) nach einem der vorstehenden Ansprüche,
**dadurch gekennzeichnet, dass** die Datenverarbeitungseinrichtung dazu eingerichtet ist, die Verläufe und/oder Positionen von Pflanzenreihen (202a-202l) in Abhängigkeit der Sensordatenbewertung wahlweise über Sensordaten beider Sensorsysteme oder über Sensordaten nur eines der Sensorsysteme zu ermitteln.

11. Landwirtschaftliches Pflanzenpflegegerät (10) nach einem der vorstehenden Ansprüche,
**dadurch gekennzeichnet, dass** die elektronische Datenverarbeitungseinrichtung dazu eingerichtet ist, die Sensordaten des ersten Sensorsystems und/oder die Sensordaten des zweiten Sensorsystems in Abhängigkeit der Sensordatenbewertung zu gewichten und Verläufe und/oder Positionen von Pflanzenreihen (202a-202l) über die gewichteten Sensordaten zu ermitteln.

12. Verfahren zum Durchführen einer Pflegemaßnahme an einer Reihenkultur (200) mittels eines landwirtschaftlichen Pflanzenpflegegeräts (10) für Reihenkulturen (200), insbesondere mittels eines landwirtschaftlichen Pflanzenpflegegeräts (10) nach einem der vorstehenden Ansprüche, mit dem Schritt:
- Ermitteln von Verläufen und/oder Positionen von Pflanzenreihen (202a-202l) mittels einer Reihenerfassungseinrichtung (20) des landwirtschaftlichen Pflanzenpflegegeräts (10),
**dadurch gekennzeichnet, dass** beim Ermitteln der Verläufe und/oder Positionen von Pflanzenreihen (202a-202l) ein erstes Sensorsystem und ein zweites Sensorsystem der Reihenerfassungseinrichtung (20) eingesetzt wird und zumindest eine Sensoreinheit (22) des ersten Sensorsystems und zumindest eine Sensoreinheit (24) des zweiten Sensorsystems in unterschiedlichen Höhen angeordnet sind und/oder unterschiedliche Ausrichtungen aufweisen, wobei , wobei die Reihenerfassungseinrichtung (20) eine elektronische Datenverarbeitungseinrichtung aufweist, welche dazu eingerichtet ist, unter Berücksichtigung von Sensordaten des ersten Sensorsystems und Sensordaten des zweiten Sensorsystems Verläufe und/oder Positionen von Pflanzenreihen (202a-202l) zu ermitteln, **dadurch gekennzeichnet, dass** die elektronische Datenverarbeitungseinrichtung dazu eingerichtet ist,
- zur Erhöhung der Verwertbarkeit der Sensordaten des ersten Sensorsystems zum Ermitteln von Verläufen und/oder Positionen von Pflanzenreihen (202a-202l) eine Auswertungsroutine für die Sensordaten des ersten Sensorsystems selbsttätig unter Berücksichtigung der Sensordaten des zweiten Sensorsystems zu verändern; und/oder
- zur Erhöhung der Verwertbarkeit der Sensordaten des zweiten Sensorsystems zum Ermitteln von Verläufen und/oder Positionen von Pflanzenreihen (202a-202l) eine Auswertungsroutine für die Sensordaten des zweiten Sensorsystems selbsttätig unter Berücksichtigung der Sensordaten des ersten Sensorsystems zu verändern.

13. Verfahren nach Anspruch 12,
**dadurch gekennzeichnet, dass** das Ermitteln der Verläufe und/oder Positionen von Pflanzenreihen (202a-202l) bei einem der Sensorsysteme über eine kamerabasierte Bildaufzeichnung und bei einem der Sensorsysteme über eine berührungslose Abstandsmessung erfolgt.
